# EUROPÄISCHE PATENTSCHRIFT

(11) **EP 2 259 874 B1**
(45) Veröffentlichungstag und Bekanntmachung des Hinweises auf die Patenterteilung: **09.10.2013**
(21) Anmeldenummer: 09717192.0
(22) Anmeldetag: 27.02.2009
(51) Int. Cl.: B01J 45/00, C08F 8/30, C08F 8/34, C08F 8/40, C08F 212/02, C22B 3/24, C22B 3/42, C01G 3/10, C22B 15/00, C08F 8/12, C08F 8/44, C08F 212/08, C08F 212/36, C08F 212/12

(54) **PICOLYLAMINHARZE**
PICOLYLAMINE RESINS
RÉSINE PICOLYLAMINE

(30) Priorität: 03.03.2008 DE 102008012223
(43) Veröffentlichungstag der Anmeldung: 15.12.2010
(73) Patentinhaber: LANXESS Deutschland GmbH, 50569 Köln (DE)
(72) Erfinder: KLIPPER, Reinhold, 50933 Köln (DE); SCHELHAAS, Michael, 50733 Köln (DE); ROSSONI, Duilio, 40764 Langenfeld (DE)
(86) Internationale Anmeldenummer: PCT/EP2009/052334
(87) Internationale Veröffentlichungsnummer: WO 2009/109520

(56) Entgegenhaltungen:
- EP-A- 0 278 411
- EP-A- 1 078 690
- EP-A- 1 078 937
- WO-A-2007/088010
- US-A- 4 098 867

## Beschreibung

Die vorliegende Anmeldung betrifft neue Methylstickstoffheterocyclenharze die als funktionelle Gruppe tertiäre Stickstoffatome in Strukturen der allgemeinen Formel (1) 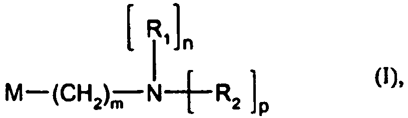 enthalten, worin
R₁ für einen gegebenenfalls substituierten Rest der Reihe Picolyl, Methylchinolin oder Methylpiperidin steht, R₂ für einen Rest -CH₂P(O)(OR₃)₂ oder -CH₂-S-CH₂COOR₃ oder -CH₂-S-C₁-C₄-alkyl oder-CH₂-S-CH₂CH(NH₂)COOR₃ oder-CH₂-S-CH₂-CH(OH)-CH₂(OH) oder 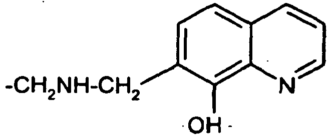 oder seine Derivate oder -C=S(NH₂) steht,
R₃ für einen Rest der Reihe H, Na oder K steht, m für eine ganze Zahl von 1 bis 4 steht, n und p jeweils unabhängig voneinander für Zahlen zwischen 0,1 und 1,9 stehen und die Summe von n und p gleich 2 ist und M für die Polymermatrix steht, ein Verfahren zu ihrer Herstellung sowie deren Verwendungen, insbesondere die Verwendung in der Hydrometallurgie und Galvanik.

Für eine Vielzahl von Trennproblemen in der Technik werden heute bereits Chelataustauscher eingesetzt. So werden sie u.a. eingesetzt zur Entfernung von Anionen aus wässrigen oder organischen Lösungen, zur Entfernung von Anionen aus Kondensaten, zur Entfernung von Farbpartikeln aus wässrigen oder organischen Lösungen oder zur Entfernung von organischen Komponenten aus wässrigen Lösungen, beispielsweise von Huminsäuren aus Oberflächenwasser.

Weiterhin können Cheiataustauscher zur Reinigung und Aufarbeitung von Wässern in der chemischen Industrie und Elektronikindustrie, insbesondere zur Herstellung von Reinstwasser oder aber in Kombination mit gelförmigen und/oder makroporösen Kationenaustauschern zur Vollentsalzung wässriger Lösungen und/oder Kondensate eingesetzt werden.

Über diese bekannten Anwendungen hinaus möchte man neue Anwendungsbereiche für Ionenaustauscher erschließen für die derzeit bekannte Chelataustauscher nicht geeignet sind oder kein hinreichendes Adsorptionsvermögen zeigen.

Es besteht daher ein Bedarf an neuen Chelataustauschern auf Basis wenigstens einer Monovinylaromatischen Verbindung und wenigstens eines Vernetzers, die eine verbesserte Selektivität für abzutrennende Ionen zeigen sowie eine hohe mechanische und osmotische Stabilität in Säulenverfahren zeigen, als die Ionenaustauscher gemäß dem Stand der Technik.

In US-A 4 098 867, Tabelle 1, wird ein heterodisperses, gelförmiges Chelatharz beschrieben, das als funktionelle Gruppe tertiäre Stickstoffatome in einem Strukturelement der Formel (II) 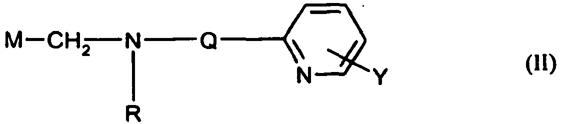 trägt, worin
- M: für die Harzmatrix steht,
- Q: für einen -CH₂- Rest steht,
- Y: für H oder C₁-C₄-Alkyl stehen kann und
- R: für -CH₂-COOH steht.

Chelatharze dieses Standes der Technik werden durch Halomethylierung eines durch Suspensionspolymerisation erhaltenen Perlpolymerisates auf der Basis von Styrol und Divinylbenzol hergestellt (Chlormethylierungsverfahren), wobei im Mittel 0,1 bis 1,0 Halomethylgruppen pro aromatischem Kern als reaktive Gruppe zur Addition der Amino-methylpyridin Chelatfunktionalität eingeführt wird.

Die Praxis der Anwendung eines solchen Harzes gemäß US-A 4 098 867 hat gezeigt, dass die Anwendung in der Metallurgie, bevorzugt in der Gewinnung von Wertmetallen, insbesondere von Kupfer, den heutigen Ansprüchen nicht mehr genügt.

WO 2007/088 010 A1 beschreibt die Verwendung von monodispersen, makroporösen Chelatharzen bei der Metallgewinnung in Hydrometallurgieprozessen sowie ein Verfahren zur Herstellung von Chelatharzen mit schwachbasischen Gruppen, insbesondere Picolinamino-Gruppen.

EP-A 1 078 690 beschreibt ein Verfahren zur Herstellung monodisperser Ionenaustauscher mit chelatisierenden funktionellen Gruppen und ihre Verwendung zur Adsorption von Metallverbindungen insbesondere Schwer- und Edelmetallverbindungen sowie zur Extraktion von Erdalkalimetallen aus Solen der Alkalichloridelektrolyse.

EP-A 0 278 411 offenbart Chelatharze mit Alkylaminophosphonsäure- oder Iminodiessigsäure-Funktionalitäten zur Entfernung von Erdalkali- und/oder Schwermetallen aus ihren Lösungen.

Die Aufgabe der vorliegenden Erfindung war es, neue Methylstickstoffheterocyclenharze mit dem zuvor beschriebenen Anforderungsprofil für die Entfernung von Stoffen, bevorzugt Kationen - insbesondere Kupfer - und mehrwertigen Anionen, aus Flüssigkeiten, bevorzugt wässrigen Medien oder Gasen bereitzustellen, sowie die Bereitstellung eines Verfahrens zu deren Herstellung. Zu entfernende Stoffe im Sinne der vorliegenden Erfindung sind zudem insbesondere Wertmetalle. Die Lösung und somit Gegenstand der vorliegenden Erfindung sind neue, monodisperse, gelförmige oder makroporöse Methylstickstoffheterocyclenharze auf Basis wenigstens einer monovinylaromatischen Verbindung und wenigstens eines Vernetzers, die als funktionelle Gruppe tertiäre Stickstoffatome in Strukturen der allgemeinen Formel (1) enthalten 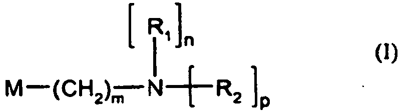 worin
R₁ für einen gegebenenfalls substituierten Rest der Reihe Picolyl, Methylchinolin oder Methylpiperidin steht, R₂ für einen Rest -CH₂P(O)(OR₃)₂ oder -CH₂-S-CH₂COOR₃ oder -CH₂-S-C1-C4-alkyl oder -CH₂-S-CH₂CH(NH₂)COOR₃ oder -CH₂- S - CH₂-CH(OH)-CH₂(OH) oder 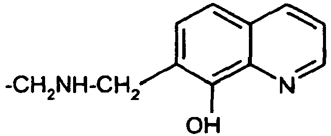 oder seine Derivate oder -C=S(NH₂) steht,
R₃ für einen Rest der Reihe H, Na oder K steht, m für eine ganze Zahl von 1 bis 4 steht, n und p jeweils unabhängig voneinander für Zahlen zwischen 0,1 und 1,9 stehen und die Summe von n und p gleich 2 ist und M für die Polymermatrix steht.

Zur Klarstellung sei angemerkt, dass vom Rahmen der Erfindung alle nachfolgend aufgeführten, allgemeinen oder in Vorzugsbereichen genannten Definitionen und Parameter in beliebigen Kombinationen umfasst sind.

In einer bevorzugten Ausführungsform steht n für Zahlen von 0,5 bis 1,5 und p für Zahlen von 1,5 bis 0,5, wobei die Summe aus n + p stets 2 ergibt.

Überraschenderweise zeigen die erfindungsgemäßen Methylstickstoffheterocyclenharze eine deutlich bessere Aufnahmefähigkeit für Kupfer als die Chelatharze der US-A 4 098 867.

Untersuchungen im Rahmen der vorliegenden Erfindung lassen die Vermutung zu, dass das in der US-A 4 098 867 beschriebene Halomethylierungsverfahren zur Einführung der funktionellen Gruppe zwecks Herstellung des heterodispersen Chelataustauschers anscheinend zu einer Begrenzung des Funktionalisierungsgrades führt. So scheint bei der Halomethylierung gemäß US-A 4 098 867 eine Nachvernetzung einzutreten, die zu einem Verlust an Halomethylgruppen führt. Aufgrund des dadurch eintretenden Verlusts an Halomethylgruppen die mit Aminomethylpyridinen umgesetzt werden könnten, stehen den resultierenden Chelatharzen weniger funktionelle Gruppen für die Gewinnung von Wertmetallen zur Verfügung, was deren Einsatz in der Metallurgie erheblich einschränkt. Darüber hinaus hat sich gezeigt, dass das Verfahren gemäß dem Stand der Technik von der Variabilität her eingeschränkt ist. Die Herstellung von Methylstickstoff-heterocyclenharzen in breiter Variabilität der Mengen an Picolylgruppen und zusätzlichen Chelatgruppen mit hohem Funktionalisierungsgrad, hoher Kinetik sowie hoher Kapazität ist nach US-A 4 098 867 nicht möglich wohl aber nach dem Verfahren gemäß der vorliegenden Erfindung.

Die vorliegende Anmeldung betrifft deshalb auch ein Verfahren zur Herstellung dieser neuen monodispersen, makroporösen oder gelförmigen Methylstickstoffheterocyclenharze die als funktionelle Gruppe tertiäre Stickstoffatome in Strukturen der allgemeinen Formel (I) tragen, 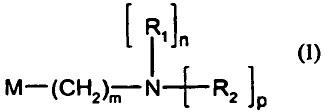 worin R₁, R₂, R₃, M, m, n und p die oben genannten Bedeutungen haben, dadurch gekennzeichnet, dass man
a) Monomertröpfchen aus einem Gemisch einer monovinylaromatischen Verbindung, eines Vernetzers, einem Initiator oder einer Initiator-Kombination, sowie gegebenenfalls einem Porogen zu einem vernetzten Perlpolymerisat umsetzt,
b) das erhaltene Perlpolymerisat mit primären Aminogruppen funktionalisiert,
c) das funktionalisierte, Amingruppen-enthaltende, Perlpolymerisat mit Halogenmethyl-stickstoffheterocyclen zu Perlpolymerisaten mit basischen, Anionen-austauschenden Gruppen, die Methylstickstoffheterocyclen enthalten, umsetzt und
d) das in Verfahrensschritt c) erhaltene Methylstickstoffheterocyclen-enthaltende Perlpolymerisat mit Phosphor-Wasserstoff-aciden Verbindungen oder Schwefel-Wasserstoff-aciden Verbindungen oder aber C-H-aciden Hydroxychinonderivaten und zudosieren einer wässrigen Formalinlösung bei Temperaturen oberhalb 50°C zum erfindungsgemäßen Methylstickstoffheterocyclenharz mit zusätzlichen Chelatgruppen umsetzt, wodurch dieses als zusätzliche Chelatgruppe -CH₂P(O)(OR₃)₂ oder -CH₂-S-CH₂COOR₃ oder -CH₂-S-C₁-C₄-alkyl oder -CH₂-S-CH₂CH(NH₂)COOR₃ oder -CH₂-S-CH₂CH(OH)CH₂(OH) oder 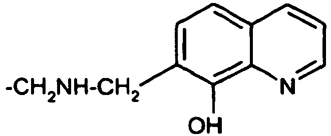 oder seine Derivate oder -C=S(NH₂) erhält.

Gemäß der vorliegenden Erfindung können die Methylstickstoffheterocyclenharze sowohl in heterodisperser Teilchengrößenverteilung als auch in monodisperser Teilchengrößenverteilung erhalten werden.

Die Herstellung heterodisperser, vernetzter Basispolymere gemäß Verfahrensschritt a) kann nach bekannten Methoden der Suspensionspolymerisation vorgegangen werden; siehe hierzu Ullmann's Encyclopedia of Industrial Chemistry, 5th Ed., Vol. A, 363-373, VCH Verlagsgesellschaft mbH, Weinheim, 1992. Die wasserunlösliche Monomer/Vernetzermischung wird einer wässrigen Phase zugesetzt, die vorzugsweise zur Stabilisierung der Monomer/Vernetzer-Tröpfchen in der dispersen Phase und den daraus entstehenden Perlpolymerisaten mindestens ein Schutzkolloid enthält.

Ein monodisperses, vernetztes Perlpolymerisat in Verfahrensschritt a) erhält man gemäß der vorliegenden Erfindung, indem man die Umsetzung des Verfahrensschrittes a) nach dem Jetting (Verdüsungsverfahren) oder nach dem seed / feed Verfahren (Saatzulauf-Verfahren) durchführt. Beide Verfahren sind dem Fachmann bekannt, worauf weiter unten eingegangen wird. Erfindungsgemäß bevorzugt strebt man eine monodisperse Teilchengrößenverteilung der erfindungsgemäßen Picolylaminharze an.

In einer alternativen Ausführungsform kann auch Schritt d) vor Schritt c) durchgeführt werden.

In Verfahrensschritt a) wird wenigstens eine monovinylaromatische Verbindung und wenigstens ein Vernetzer eingesetzt. Es ist jedoch auch möglich, Mischungen zweier oder mehrerer monovinylaromatischer Verbindungen und Mischungen zweier oder mehrerer polyvinyl-aromatischer Verbindungen einzusetzen.

Als monovinylaromatische Verbindungen im Sinne der vorliegenden Erfindung werden in Verfahrensschritt a) bevorzugt monoethylenisch ungesättigte Verbindungen, besonders bevorzugt Styrol, Vinyltoluol, Ethylstyrol, α-Methylstyrol, Chlorstyrol, Chlormethylstyrol, eingesetzt.Insbesondere bevorzugt werden Styrol oder Mischungen aus Styrol mit den vorgenannten Monomeren eingesetzt.

Bevorzugte als Vernetzer im Sinne der vorliegenden Erfindung sind für den Verfahrensschritt a) multifunktionelle ethylenisch ungesättigte Verbindungen besonders bevorzugt Butadien, Isopren, Divinylbenzol, Divinyltoluol, Tri-vinylbenzol, Divinylnaphtalin, Trivinylnaphtalin, Divinylcyclohexan, Trivinylcyclohexan, Triallycyanurat, Triallylamin, 1,7-Octadien, 1,5-Hexadien, Cyclopentadien, Norbomadien, Diethylenglykoldivinylether, Triethylenglykoldivinylether, Tetraethylenglykoldivinylether, Butandioldivinylether, Ethylenglycoldivinylether, Cyclohexandimethanoldivinylether, Hexandioldivinylether, Trimethylolpropantrivinylether, Ethylenglycoldimethacrylat, Trimethylolpropantrimethacrylat oder Allylmethacrylat. Divinylbenzol ist in vielen Fällen insbesondere bevorzugt. Für die meisten Anwendungen sind kommerzielle Divinylbenzolqualitäten, die neben den Isomeren des Divinylbenzols auch Ethylvinylbenzol enthalten, ausreichend.

Die Vernetzer werden bevorzugt in Mengen von 1-20 Gew.-%, besonders bevorzugt 2-12 Gew.-%, insbesondere bevorzugt 4-10 Gew.-%, bezogen auf das Monomer oder dessen Mischung mit weiteren Monomeren eingesetzt. Die Art des Vernetzers wird im Hinblick auf die spätere Verwendung des Perlpolymerisats ausgewählt.

(Meth)acrylverbindungen im Sinne der vorliegenden Erfindung sind monoethylenisch ungesättigte Verbindungen, bevorzugt (Meth)acrylsäurealkylester, (Meth)acrylnitrile, (Meth)acrylsäure, besonders bevorzugt Acrylsäuremethylester, Methacrylsäuremethylester und Acrylnitril. Insbesondere bevorzugt werden im Sinne der vorliegenden Erfindung Acrylnitril oder Acrylsäure-methylester eingesetzt.

Die (Meth)acrylverbindungen werden bevorzugt in Mengen von 1 bis 30 Gew.-%, besonders bevorzugt von 1 bis 10 Gew.-%, bezogen auf die Summe aller Monomeren eingesetzt. Erfindungsgemäß steht (Meth)acrylsäure sowohl für Acrylsäure als auch Methacrylsäure. Dies gilt auch für die in der vorliegenden Erfindung weiterhin genannten (Meth)acrylverbindungen.

Die den erfindungsgemäßen Methylstickstoffheterocyclenharzen zugrunde liegenden Basispolymere liegen in jedem Fall nach Verfahrensschritt a) in monodisperser Perlgrößenverteilung vor.

In einer bevorzugten Ausführungsform der vorliegenden Erfindung kommen in Verfahrensschritt a) mikroverkapselte Monomertröpfchen zum Einsatz, wobei für die Mikroverkapselung der Monomertröpfchen die für den Einsatz als Komplexkoazervate bekannten Materialien in Frage kommen, insbesondere Polyester, natürliche oder synthetische Polyamide, Polyurethane, Polyharnstoffe.

Als natürliches Polyamid wird bevorzugt Gelatine eingesetzt. Diese kommt insbesondere als Koazervat und Komplexkoazervat zur Anwendung. Unter gelatinehaltigen Komplexkoazervaten im Sinne der vorliegenden Erfindung werden vor allem Kombinationen von Gelatine mit synthetischen Polyelektrolyten verstanden. Geeignete synthetische Polyelektrolyte sind Copolymerisate mit eingebauten Einheiten, bevorzugt von Maleinsäure, Acrylsäure, Methacrylsäure, Acrylamid und Methacrylamid. Besonders bevorzugt werden Acrylsäure und Acrylamid eingesetzt. Gelatinehaltige Kapseln können mit üblichen Härtungsmitteln, bevorzugt Formaldehyd oder Glutardialdehyd gehärtet werden. Die Verkapselung von Monomertröpfchen mit Gelatine, gelatinehaltigen Koazervaten oder gelatinehaltigen Komplexkoazervaten wird in der EP-A 0 046 535 eingehend beschrieben. Die Methoden der Verkapselung mit synthetischen Polymeren sind bekannt. Gut geeignet ist beispielsweise die Phasengrenzflächenkondensation, bei der eine im Monomertröpfchen gelöste Reaktivkomponente bevorzugt ein Isocyanat oder ein Säurechlorid, mit einer zweiten, in der wässrigen Phase gelösten Reaktivkomponente bevorzugt einem Amin, zur Reaktion gebracht wird.

Die gegebenenfalls mikroverkapselten Monomertröpfchen enthalten einen Initiator oder Mischungen von Initiatoren zur Auslösung der Polymerisation. Für das erfindungsgemäße Verfahren bevorzugt geeignete Initiatoren sind Peroxyverbindungen, besonders bevorzugt Dibenzoylperoxid, Dilauroylperoxid, Bis (p-chlorbenzoyl)peroxid, Dicyclohexylperoxydicarbonat, tert.-Butylperoctoat, tert.-Butylperoxy-2-ethyl-hexanoat, 2,5-Bis(2-ethylhexanoylperoxy)-2,5-dimethyl-hexan oder tert.-Amylperoxy-2-etylhexan, sowie Azoverbindungen, besonders bevorzugt 2,2'-Azo-bis(isobutyronitril) oder 2,2'-Azobis(2-methylisobutyronitril).

Die Initiatoren werden bevorzugt in Mengen von 0,05 bis 2,5 Gew.-%, besonders bevorzugt 0,1 bis 1,5 Gew.%, bezogen auf die Monomeren-Mischung, angewendet.

Im Gegensatz zu der aus dem Stand der Technik bekannten heterodispersen Teilchengrößenverteilung werden in der vorliegenden Anmeldung als monodispers solche Perlpolymerisate oder Picolylaminharze mit zusätzlicher Chelatfunktion bezeichnet, bei denen mindestens 90 Volumen-oder Massen-% der Teilchen einen Durchmesser besitzen, der in dem Intervall mit der Breite von ± 10 % des häufigsten Durchmessers um den häufigsten Durchmesser herum liegt.

Zum Beispiel bei einem Perlpolymerisat mit häufigstem Durchmesser von 0,5 mm liegen mindestens 90-Volumen-% oder Massen-% in einem Größenintervall zwischen 0,45 mm und 0,55 mm, bei einem Stoff mit häufigstem Durchmesser von 0,7 mm liegen mindestens 90 Volumen-% oder Massen-% in einem Größenintervall zwischen 0,77 mm und 0,63 mm.

Ein monodisperses, vernetztes, vinylaromatisches Grundpolymerisat gemäß Verfahrensschritt a) kann nach den aus der Literatur bekannten Verfahren hergestellt werden. Beispielsweise werden solche Verfahren in US-A 4 444 961, EP-A 0 046 535, US 4 419 245 oder WO 93/12167 beschrieben, deren Inhalte von der vorliegenden Anmeldung hinsichtlich des Verfahrensschrittes a) vollumfänglich mit umfasst werden. Verfährt man im Verfahrensschritt a) nach dem Verdüsungs-(Jetting) oder Saatzulauf-Verfahren (seed/feed Prozess), werden erfindungsgemäß monodisperse Perlpolymerisate und die daraus herzustellenden monodispersen Methylstickstoffheterocyclenharze erhalten.

Die Begriffe mikroporös oder gelförmig bzw. makroporös sind in der Fachliteratur bereits eingehend beschrieben worden. Bevorzugte Perlpolymerisate im Sinne der vorliegenden Erfindung, hergestellt durch Verfahrensschritt a), weisen eine makroporöse Struktur auf.

Die Ausbildung makroporöser Perlpolymerisate kann beispielsweise durch Zusatz von Inertmaterialien (Porogene) zu der Monomermischung bei der Polymerisation erfolgen. Als solche sind vor allem organische Substanzen geeignet, die sich im Monomer lösen, das Polymerisat aber schlecht lösen bzw. quellen (Fällmittel für Polymere) bevorzugt aliphatische Kohlenwasserstoffe (Farbenfabriken Bayer DBP 1045102, 1957; DBP 1113570, 1957).

In US-A 4 382 124 werden als Porogen beispielsweise Alkohole mit 4 bis 10 Kohlenstoffatomen zur Herstellung monodisperser, makroporöser Perlpolymerisate auf Styrol/Divinylbenzol-Basis eingesetzt. Ferner wird eine Übersicht der Herstellmethoden makroporöser Perlpolymerisate gegeben. Erfindungsgemäß bevorzugt sind als Porogene organische Lösungsmittel geeignet, die das entstandene Polymerisat schlecht lösen bzw. quellen. Bevorzugt seien Hexan, Octan, Isooctan, Isododecan, Methylethylketon, Butanol oder Octanol und deren Isomeren genannt.

Das gegebenenfalls mikroverkapselte Monomertröpfchen kann gegebenenfalls auch bis zu 30 Gew.% (bezogen auf das Monomer) vernetztes oder unvernetztes Polymer enthalten. Bevorzugte Polymere leiten sich aus den vorgenannten Monomeren, besonders bevorzugt von Styrol, ab.

Die mittlere Teichengröße der gegebenenfalls verkapselten Monomertröpfchen beträgt 10 - 1000 µm, vorzugsweise 100 - 1000 µm. Bei der Herstellung der monodispersen Perlpolymerisate gemäß Verfahrensschritt a) kann die wässrige Phase gegebenenfalls einen gelösten Polymerisationsinhibitor enthalten. Als Inhibitoren im Sinne der vorliegenden Erfindung kommen sowohl anorganische als auch organische Stoffe in Frage. Bevorzugte anorganische Inhibitoren sind Stickstoffverbindungen wie Hydroxylamin, Hydrazin, Natriumnitrit oder Kaliumnitrit, Salze der phosphorigen Säure wie Natriumhydrogenphosphit sowie schwefelhaltige Verbindungen wie Natriumdithionit, Natriumthiosulfat, Natriumsulfit, Natriumbisulfit, Natriumrhodanid oder Ammoniumrhodanid. Bevorzugte organische Inhibitoren sind phenolische Verbindungen wie Hydrochinon, Hydrochinonmonomethylether, Resorcin, Brenzkatechin, tert.-Butylbrenzkatechin, Pyrogallol oder Kondensationsprodukte aus Phenolen mit Aldehyden. Weitere bevorzugte organische Inhibitoren sind stickstoffhaltige Verbindungen, wie Hydroxylaminderivate, bevorzugt N,N-Diethylhydroxylamin oder N-Isopropylhydroxylamin, sowie sulfonierte oder carboxylierte N-Alkylhydroxylamin- oder N,N-Dialkylhydroxylaminderivate, Hydrazinderivate, bevorzugt N,N-Hydrazinodiessigsäure, Nitrosoverbindungen, vorzugsweise N-Nitrosophenylhydroxylamin, N-Nitrosophenylhydroxylamin-Ammoniumsalz oder N-Nitrosophenylhydroxylamin-Aluminiumsalz. Die Konzentration des Inhibitors beträgt 5 - 1000 ppm (bezogen auf die wässrige Phase), vorzugsweise 10 - 500 ppm, besonders bevorzugt 10 - 250 ppm.

Die Polymerisation der gegebenenfalls mikroverkapselten Monomertröpfchen zum kugelförmigen Perlpolymerisat erfolgt, wie bereits oben erwähnt, gegebenenfalls in Anwesenheit eines oder mehrerer Schutzkolloide in der wässrigen Phase. Als Schutzkolloide eignen sich natürliche oder synthetische wasserlösliche Polymere, bevorzugt Gelatine, Stärke, Polyvinylalkohol, Polyvinylpyrrolidon, Polyacrylsäure, Polymethacrylsäure oder Copolymerisate aus (Meth)-acrylsäure und (Meth)acrylsäureestern. Sehr gut geeignet sind auch Cellulosederivate, insbesondere Celluloseester und Celluloseether, wie Carboxymethylcellulose Methylhydroxyethylcellulose, Methylhydroxypropylcellulose und Hydroxyethylcellulose. Besonders bevorzugt ist Gelatine. Die Einsatzmenge der Schutzkolloide beträgt im allgemeinen 0,05 bis 1 Gew.-% bezogen auf die wässrige Phase, vorzugsweise 0,05 bis 0,5 Gew.-%.

Die Polymerisation zum Perlpolymerisat in Verfahrensschritt a) kann gegebenenfalls auch in Anwesenheit eines Puffersystems durchgeführt werden. Bevorzugt werden Puffersysteme, die den pH-Wert der wässrigen Phase zu Beginn der Polymerisation auf einen Wert zwischen 14 und 6, vorzugsweise zwischen 12 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Besonders bevorzugte Puffersysteme enthalten Phosphat- oder Boratsalze. Die Begriffe Phosphat und Borat im Sinne der Erfindung umfassen auch die Kondensationsprodukte der ortho-Formen entsprechender Säuren und Salze. Die Konzentration des Phosphats bzw. Borats in der wässrigen Phase beträgt 0,5 - 500 mmol/l, vorzugsweise 2,5 - 100 mmol/l.

Die Rührgeschwindigkeit bei der Polymerisation ist weniger kritisch und hat im Gegensatz zur herkömmlichen Perlpolymerisation keinen Einfluss auf die Teilchengröße. Es werden niedrige Rührgeschwindigkeiten angewandt die ausreichen, die suspendierten Monomertröpfchen in Schwebe zu halten und die Abführung der Polymerisationswärme zu unterstützen. Für diese Aufgabe können verschiedene Rührertypen eingesetzt werden. Besonders geeignet sind Gitterrührer mit axialer Wirkung.

Das Volumenverhältnis von verkapselten Monomertröpfchen zu wässriger Phase beträgt bevorzugt 1 : 0,75 bis 1 : 20, besonders bevorzugt 1 : 1 bis 1 : 6.

Die Polymerisationstemperatur im Verfahrensschritt a) richtet sich nach der Zerfallstemperatur des eingesetzten Initiators. Sie liegt im Allgemeinen zwischen 50 bis 180°C, vorzugsweise zwischen 55 und 130°C. Die Polymerisation dauert 0,5 bis einige Stunden. Bevorzugt wird ein Temperaturprogramm angewendet, bei dem die Polymerisation bei niedriger Temperatur, bevorzugt ca. 60°C begonnen wird und die Reaktionstemperatur mit fortschreitendem Polymerisationsumsatz gesteigert wird. Auf diese Weise lässt sich beispielsweise die Forderung nach sicherem Reaktionsverlauf und hohem Polymerisationsumsatz sehr gut erfüllen. Nach der Polymerisation wird das Polymerisat mit üblichen Methoden, bevorzugt durch Filtrieren oder Dekantieren, isoliert und gegebenenfalls gewaschen.

Das im Verfahrensschritt a) hergestellte vernetzte Perlpolymerisat auf Basis von Monovinylaromaten wird im Gegensatz zur US-A 4 098 867 (Chlormethylierungsverfahren) nach dem Phthalimidverfahren mit primären Aminogruppen funktionalisiert. Hierzu wird im Verfahrensschritt b) zunächst das Amidomethylierungsreagens hergestellt. Dazu wird bevorzugt Phthalimid oder ein Phthalimidderivat in einem Lösungsmittel gelöst und mit Formalin versetzt. Anschließend wird unter Wasserabspaltung hieraus ein Bis-(Phthalimido)ether gebildet. Der Bis-(Phthalimido)ether kann in einer alternativen bevorzugten Ausführungsform zum Phthalimidoester umgesetzt werden. Bevorzugte Phthalimidderivate im Sinne der vorliegenden Erfindung sind Phthalimid selber oder substituierte Phthalimide, bevorzugt Methylphthalimid.

Als Lösungsmittel kommen im Verfahrensschritt b) bevorzugt inerte Lösungsmittel zum Einsatz die geeignet sind, das Polymer zu quellen. Erfindungsgemäß besonders bevorzugt werden hierfür chlorierte Kohlenwasserstoffe, insbesondere bevorzugt Dichlorethan oder Methylenchlorid eingesetzt.

Im Verfahrensschritt b) wird das Perlpolymerisat mit Phthalimidderivaten kondensiert. Bevorzugt wird dabei als Katalysator Oleum, Schwefelsäure oder Schwefeltrioxid eingesetzt.

Das erfindungsgemäße in Verfahrensschritt b) einzusetzende Phthalimidverfahren kann gemäß US-A 4,952,608 wie folgt ausgerührt werden:
Phthalimid und 20-40 %ige wässrige Formaldehydlösung (Molverhältnis Phthalimid: Formaldehyd etwa 1:1-1,5) werden in das Quellungsmittel eingetragen (Menge des Quellungsmittels: etwa 3-6 Gew.-Teile je Gewichtsteil Phthalimid). Die auf diese Weise erhaltene Suspension wird unter Rühren auf Temperaturen von 60 bis 80°C erwärmt und durch Zugabe von 20 bis 50 %iger wässriger Natronlauge auf einen pH-Wert von 5-6 eingestellt und während der Umsetzung gegebenenfalls durch Zugabe weiterer Natronlauge in diesem Bereich gehalten. Der pH-Wert wird mittels einer in die bewegte Suspension eintauchenden Elektrode bestimmt. Das Ende der Umsetzung ist daran erkennbar, dass sich die Suspension in eine trübe Lösung umgewandelt hat. Der Rührer wird abgestellt, damit sich die Phasen trennen können. Die untere, das N-Hydroxymethylphthalimid enthaltende organische Phase wird abgetrennt und getrocknet.

Die auf diese Weise erhaltene Lösung von N-Hydroxymethylphthalimid im Quellungsmittel wird entweder unmittelbar für die Amidomethylierung der vernetzten, wasserunlöslichen, aromatische Kerne enthaltenden organischen Polymeren eingesetzt oder aber das N-Hydroymethylphthalimid wird zunächst in den Bis-(phthalimidomethyl)-ether oder in einen Ester überführt und der Ether bzw. der Ester für die Amidoalkylierungsreaktion eingesetzt. Die Amidomethylierung der organischen Polymere mit der Lösung des N-Hydroxymethylphthalimids, des Bis-(phthalimidomethyl)-ethers oder den Estern der N-Hydroxymethylphthalimids in den Quellungsmitteln erfolgt in an sich bekannter Weise z.B. nach dem in den DE-AS 22 11 134, 21 61 628, 25 19 244 und 24 18 976 beschriebenen Arbeitsweisen.

Die Amidomethylierung der organischen Polymere sei anhand der Amidomethylierung mit dem Bis-(phthalimidomethyl)-ether (A) und anhand der Amidomethylierung mit dem Essigsäureester des N-hydroxymethylphthalimids (B) erläutert:
A. Die in der ersten Verfahrensstufe erhaltene Lösung des N-Hydroxymethylphthalimids im Quellungsmittel wird mit katalytischen Mengen Schwefelsäure (0,07 Mol H₂SO₄ je Mol N-Hydroxymethylphthalimid) versetzt, unter Rühren auf Rückflusstemperatur erhitzt und so lange bei dieser Temperatur gerührt, bis die Etherbildung beendet ist (der Verlauf der Etherbildung wird chromatographisch verfolgt; die Ausbeute an Ether ist annähernd quantitativ). Hierbei wird Wasser destillativ aus dem System entfernt. Die nach beendeter Etherbildung vorliegende Suspension wird auf etwa Raumtemperatur abgekühlt und mit dem für die Amidomethylierung vorgesehenen Friedel-Craft-Katalysator, z.B. Eisen-III-Chlorid, Zinntetrachlorid oder vorzugsweise Schwefeltrioxid versetzt. In dieser Mischung wird das zu amidomethylierte Polymer eingetragen (Menge an Polymer: Verhältnis Mol im Polymerisat enthaltene aromatische Kerne: Bis-(phthalimidomethyl)-ether = 1:0,5-4, vorzugsweise 1:0,75-2,5). Das Reaktionsgemisch wird unter Rühren auf Temperaturen von 65 bis 80°C erwärmt und anschließend 18 Stunden bei dieser Temperatur gerührt. Nach dem Abkühlen auf Raumtemperatur wird das phthalimidomethylierte Polymerisat von der flüssigen Phase (dem Quellungsmittel) abgetrennt, in entsalztem Wasser aufgenommen und durch azeotrope Destillation von anhaftenden Quellungsmittel befreit. Abschließend wird das phthalimidomethylierte Polymer in bekannter Weise verseift, z.B. durch alkalische oder saure Hydrolyse oder durch Umsetzung mit Hydrazin und anschließende saure Hydrolyse, gegebenenfalls in Gegenwart eines organischen Lösungsmittels; dieses organische Lösungsmittel kann z.B. das für die Amidomethylierung verwendete Quellungsmittel sein.
B. Bei der Amidomethylierung mit Estern des N-Hydroxymethylphthalimids, z.B. dem Essigsäureester, wird die in der ersten Verfahrensstufe erhaltene getrocknete Lösung des N-Hydroxymethylphthalimids im verwendeten Quellungsmittel mit der für die Veresterung erforderlichen Menge Essigsäureanhydrid versetzt und unter Rühren so lange auf Rückflusstemperatur erhitzt, bis die Esterbildung beendet ist (der Verlauf der Esterbildung wird chromatographisch verfolgt; die Ausbeute an Ester ist praktisch quantitativ). Nach beendeter Veresterung wird die Lösung auf 20 bis 50°C abgekühlt und das zu amidomethylierende organische Polymer unter Rühren eingetragen (Menge an Polymer: Verhältnis aromatische Kerne im Polymer : Mol Ester = 1:0,5-4, vorzugsweise 1:1-2,5). Das Polymerisat wird in der Esterlösung 0,5-2 Stunden bei 50 bis 70°C eingequollen. Anschließend wird die Suspension auf Rückflusstemperatur erwärmt und mit dem vorgesehenen Friedel-Craft-Katalysator, vorzugsweise Schwefelsäure, versetzt und anschließend 20 Stunden bei Rückflusstemperatur gerührt.

Der pH-Wert Bereich zur Bildung von n-Methylolphthalimid liegt zwischen 4-10, bevorzugt 5-6,5; die Bildung von N-Methylolphthalimid kann drucklos oder unter Druck erfolgen.

Die Aufarbeitung des Reaktionsgemisches und die Hydrolyse des phthalimidomethylierten Polymers wird wie unter A. beschrieben vorgenommen.

Die Abspaltung des Phthalsäurerestes und damit die Freilegung der Aminomethylgruppe erfolgt im Verfahrensschritt c) durch Behandeln des phthalimidomethylierten vernetzten Perlpolymerisates aus Verfahrensschritt b) mit wässrigen oder alkoholischen Lösungen eines Alkalihydroxids, bevorzugt Natriumhydroxid oder Kaliumhydroxid, bei Temperaturen zwischen 100 und 250°C, vorzugsweise 120 -190°C. Die Konzentration der Natronlauge liegt bevorzugt im Bereich von 10 bis 50 Gew.-%, besonders bevorzugt im Bereich von 20 bis 40 Gew.-%. Dieses Verfahren ermöglicht die Herstellung Aminoalkylgruppen-haltiger vernetzter Perlpolymerisate mit einer Substitution der aromatischen Kerne größer 1.

Das dabei entstehende aminomethylierte Perlpolymerisat wird schließlich mit voll entsalztem Wasser (VE-Wasser) alkalifrei gewaschen.

Im Verfahrensschritt c) erfolgt die Herstellung der erfindungsgemäßen Methylstickstoff-heterocyclenharze durch Umsetzung der primären Aminoalkylgruppen-haltigen monodispersen, vernetzten, vinylaromatischen Perlpolymerisate aus Verfahrensschritt b) in wässriger Suspension mit gegebenenfalls substituierten Chlormethylstickstoffheterocyclen bevorzugt mit Chlor-methylpyridin bzw. seinem Hydrochlorid, 2-Chlormethylchinolin oder 2-Chlormethylpiperidin.

Chlormethylpyridin bzw. sein Hydrochlorid kann als 2-Chlormethylpyridin, 3-Chlormethylpyridin oder 4-Chlormethylpyridin eingesetzt werden.

Als bevorzugtes Reagenz wird im Verfahrensschritt c) 2-Chlormethylpyridin Hydrochlorid, bevorzugt in wässriger Lösung, eingesetzt.

In einer bevorzugten Ausführungsform wird die Umsetzung im Verfahrensschritt c) unter Zugabe von Alkalilauge durchgeführt, besonders bevorzugt von Kalilauge oder Natronlauge, insbesondere bevorzugt von Natronlauge. Durch Zugabe von Alkalilauge bei der Umsetzung des Aminomethylgruppen-haltigen, vernetzten, vinylaromatischen Grundpolymerisates aus Verfahrensschritt c) in wässriger Suspension mit Halomethylstickstoffheterocyclen, bevorzugt Picolylchlorid oder seinem Hydrochlorid, wird der pH Wert bei der Umsetzung im Bereich 4 - 11 gehalten. Bevorzugt wird der pH Wert im Bereich 6 - 8 gehalten.

Im Verfahrensschritt d) erfolgt die Einführung der zweiten chelatisierenden Gruppe, der -CH₂P(O)(OR₃)₂ oder -CH₂-S-CH₂COOR₃ oder -CH₂-S-C₁-C₄-alkyl oder -CH₂-S-CH₂CH(NH₂)COOR₃ oder -CH₂₋ S- CH₂-CH(OH)-CH₂(OH) oder 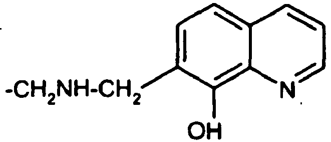 oder seine Derivate oder -C=S(NH₂) Gruppe.

Zu diesem Zweck wird das Perlpolymerisat aus Verfahrensschritt c) bei Raumtemperatur in wässrige Schwefelsäure eingetragen.

Der pH Wert der Suspension ist dabei kleiner 3, bevorzugt kleiner 2.

Phosphor-Wasserstoff-acide Verbindungen, bevorzugt Phosphor(III)-Verbindungen, besonders bevorzugt phosphorige Säure oder Dimethylphosphit, oder aber Schwefel-Wasserstoff-acide Verbindungen, bevorzugt Thiowasserstoffverbindungen, besonders bevorzugt Thioglykolsäure, Alkylmercaptane, besonders bevorzugt Butanthiol, L-Cystein oder 1,2 Dihydroxypropyl-mercaptowasserstoff oder aber C-H-acide Hydroxychinonderivate werden hinzu dosiert. Schließlich wird bei Temperaturen oberhalb 50 °C, besonders bevorzugt bei 80 bis 95 °C wässrige Formalinlösung hinzu dosiert.

Bei Rückflusstemperatur wird anschließend mehrere Stunden nachgerührt.

Nach dem Abkühlen der Suspension wird das erfindungsgemäße Methylstickstoffheterocyclenharz, bevorzugt über ein Sieb, abgetrennt und mit Wasser gewaschen. Zur Entfernung kleinerer Festpartikel und flüssiger Verunreinigungen kann das erfindungsgemäße Picolylaminharz in einer Säule mit Wasser klassiert werden.

Wurde als zweite chelatisierende Gruppe eine Gruppe eingeführt, die eine Säurefunktion enthält, so kann das erfindungsgemäße Picolylaminharz durch Behandlung mit wässrigen Alkalien wie Natronlauge oder Kalilauge in die Salzform überführt werden.

Die erfindungsgemäß hergestellten Methylstickstoffheterocyclenharze eignen sich zur Adsorbtion von Metallen, insbesondere Schwermetallen und Edelmetallen und ihren Verbindungen aus wässrigen Lösungen, organischen Flüssigkeiten oder Gasen, bevorzugt aus sauren, wässrigen Lösungen. Die erfindungsgemäß hergestellten Methylstickstoffheterocyclenharze eignen sich besonders zur Entfernung von Schwermetallen oder Edelmetallen aus wässrigen Lösungen, insbesondere aus wässrigen Lösungen von Erdalkalien oder Alkalien, aus Solen der Alkalichloridelektrolyse, aus wässrigen Salzsäuren, aus Abwässern oder Rauchgaswäschen, aber auch aus flüssigen oder gasförmigen Kohlenwasserstoffen, Carbonsäuren wie Adipinsäure, Glutarsäure oder Bernsteinsäure, Erdgasen, Erdgaskondensaten, Erdölen oder Halogenkohlenwasserstoffen, wie Chlor- oder Fluorkohlenwasserstoffen oder Fluor/Chlor-Kohlenwasserstoffen. Darüber hinaus eignen sich die erfindungsgemäßen Methylstickstoffheterocyclenharze zur Entfernung von Erdalkalimetallen aus Solen, wie sie üblicherweise in der Alkalichloridelektrolyse eingesetzt werden. Die erfindungsgemäßen Picolylaminharze eignen sich aber auch zur Entfernung von Schwermetallen, insbesondere Eisen, Cadmium oder Blei aus Stoffen die während einer elektrolytischen Behandlung, beispielsweise einer Dimerisierung von Acrylnitril zu Adiponitril, umgesetzt werden.

Ganz besonders geeignet sind die erfindungsgemäßen Methylstickstoffheterocyclenharze zur Entfernung von Quecksilber, Eisen, Cobalt, Nickel, Kupfer, Zink, Blei, Cadmium, Mangan, Uran, Vanadium, Elementen der Platingruppe sowie Gold oder Silber aus den oben aufgeführten Lösungen, Flüssigkeiten oder Gasen.

Insbesondere eignen sich die erfindungsgemäßen Methylstickstoffheterocyclenharze zur Entfernung von Rhodium oder Elementen der Platingruppe sowie Gold, Silber oder Rhodium oder Edelmetall-enthaltende Katalysatorreste aus organischen Lösungen oder Lösemitteln.

Insbesondere eignen sich aber die erfindungsgemäßen Methylstickstoffheterocyclenharze zur Isolierung oder Gewinnung von Kupfer aus Kupferlösungen die zusätzlich ebenfalls in wässriger Lösung vorliegende zweiwertige Fremdmetalle aufweisen, insbesondere ganz besonders bevorzugt zur Adsorption von Kupfer aus Kupfer- / Eisensulfatlösungen oder aus Kupfer- / Nickelsulfatlösungen.

Neben der Metallurgie zur Gewinnung von Wertmetallen eignen sich die erfindungsgemäßen Picolylaminhane mit tertiärem Stickstoffatom in der funktionellen Gruppe der allgemeinen Formel (I) hervorragend für verschiedenste Einsatzgebiete in der chemischen Industrie, der Elektronik-Industrie, der Abfall-Entsorgungs/Verwertungs-Industrie oder der Galvano- oder Oberflächentechnik.

### Untersuchungsmethoden

### Bestimmung der Menge basischer Aminomethylgruppen im aminomethylierten, vernetzten Polystyrol Perlpolymerisat:

100 ml des aminomethylierten Perlpolymerisates werden auf dem Stampfvolumeter eingerüttelt und anschließend mit VE-Wasser in eine Glassäule gespült. In 1 Stunde und 40 Minuten werden 1000 ml 2 gew.-%ige Natronlauge überfiltriert. Anschließend wird VE-Wasser überfiltriert bis 100 ml Eluat mit Phenolphthalein versetzt einen Verbrauch an 0,1 n (0,1 normaler) Salzsäure von höchstens 0,05 ml haben.

50 ml dieses Harzes werden in einem Becherglas mit 50 ml VE-Wasser und 100 ml In Salzsäure versetzt. Die Suspension wird 30 Minuten gerührt und anschließend in eine Glassäule gefüllt. Die Flüssigkeit wird abgelassen. Es werden weitere 100 ml 1n Salzsäure über das Harz in 20 Minuten filtriert. Anschließend werden 200 ml Methanol überfiltriert. Alle Eluate werden gesammelt und vereinigt und mit In Natronlauge gegen Methylorange titriert.

Die Menge an Aminomethylgruppen in 1 Liter aminomethyliertem Harz errechnet sich nach folgender Formel: (200 - V) · 20 = mol Aminomethylgruppen pro Liter Harz.

VE-Wasser oder voll entsalztes Wasser im Sinne der vorliegenden Erfindung ist gekennzeichnet, indem es eine Leitfähigkeit von 0,1 bis 10 µS besitzt, wobei der Gehalt an gelösten oder ungelösten Metallionen nicht größer als 1 ppm, bevorzugt nicht größer als 0,5 ppm für Fe, Co, Ni, Mo, Cr, Cu als individuelle Komponenten ist und nicht größer als 10 ppm, bevorzugt nicht größer als 1 ppm für die Summe der genannten Metalle ist.

### Beispiel 1

### 1a) Herstellung eines monodispersen, makroporösen Perlpolymerisates auf der Basis von Styrol, Divinylbenzol und Ethylstyrol

In einem 10 l Glasreaktor wurden 3000 g VE-Wasser vorgelegt und eine Lösung aus 10 g Gelatine, 1 6 g di-Natriumhydrogenphosphatdodekahydrat und 0,73 g Resorcin in 320 g VE-Wasser hinzugefüllt und durchmischt. Die Mischung wurde auf 25°C temperiert. Unter Rühren wurde anschließend eine Mischung aus 3200 g mikroverkapselter Monomertröpfchen mit enger Teilchen-grössenverteilung aus 3,6 Gew.-% Divinylbenzol und 0,9 Gew.-% Ethylstyrol (eingesetzt als handelsübliches Isomerengemisch aus Divinylbenzol und Ethylstyrol mit 80 % Divinylbenzol), 0,5 Gew.-% Dibenzoylperoxid, 56,2 Gew.-% Styrol und 38,8 Gew.-% Isododekan (technisches Isomerengemisch mit hohem Anteil an Pentamethylheptan) gegeben, wobei die Mikrokapsel aus einem mit Formaldehyd gehärteten Komplexkoazervat aus Gelatine und einem Copolymer aus Acrylamid und Acrylsäure bestand, und 3200 g wässriger Phase mit einem pH-Wert von 12 zugesetzt. Die mittlere Teilehengröße der Monomertröpfchen betrug 300 µm.

Der Ansatz wurde unter Rühren durch Temperaturerhöhung nach einem Temperaturprogramm, bei 25°C beginnend und bei 95°C endend, auspolymerisiert. Der Ansatz wurde abgekühlt, über ein 32 µm-Sieb gewaschen und anschließend im Vakuum bei 80°C getrocknet. Man erhielt 1893 g eines kugelförmigen Perlpolymerisates mit einer mittleren Teilchengröße von 280 µm, enger Teilchengrößenverteilung und glatter Oberfläche.

Das Perlpolymerisat war in der Aufsicht kreidig weiß und wies eine Schüttdichte von ca. 370 g/l auf.

### 1b) Herstellung eines amidomethylierten Perlpolymerisates

Bei Raumtemperatur wurden 1455 ml Dichlorethan, 540,7 g Phthalimid und 373,7 g 30,1 gew.-%iges Formalin vorgelegt. Der pH Wert der Suspension wurde mit Natronlauge auf 5,5 bis 6 eingestellt. Anschließend wurde das Wasser destillativ entfernt. Dann wurden 36,9 g Schwefelsäure zudosiert. Das entstehende Wasser wurde destillativ entfernt. Der Ansatz wurde abgekühlt. Bei 30°C wurden 144,9 g 65 %iges Oleum und anschließend 371,4 g monodisperses Perlpolymerisat, hergestellt nach Verfahrensschritt 1a) eindosiert. Die Suspension wurde auf 70°C erhitzt und weitere 6,5 Stunden bei dieser Temperatur gerührt. Die Reaktionsbrühe wurde abgezogen, VE-Wasser wurde hinzudosiert und Restmengen an Dichlorethan wurden destillativ entfernt.
Ausbeute an amidomethyliertem Perlpolymerisat: 1860 ml
Elementaranalytische Zusammensetzung:

| | |
|---|---|
| Kohlenstoff: | 76,8 Gew. %; |
| Wasserstoff: | 5,2 Gew. %; |
| Stickstoff: | 5,0 Gew. %; |
| Rest: | Sauerstoff. |

### 1 b') Herstellung eines aminomethylierten Perlpolymerisates

Zu 1800 ml amidomethyliertem Perlpolymerisat aus 1b) wurden 512 ml 50 gew.-%ige Natronlauge und 1638 ml VE-Wasser bei Raumtemperatur zudosiert. Die Suspension wurde in 2 Stunden auf 180°C erhitzt und 8 Stunden bei dieser Temperatur gerührt. Das erhaltene Perlpolymerisat wurde mit VE-Wasser gewaschen.
Ausbeute an aminomethyliertem Perlpolymerisat: 1440 ml
Elementaranalytische Zusammensetzung:

| | |
|---|---|
| Stickstoff: | 9,3 Gew. % |
| Kohlenstoff: | 78,5 Gew. %; |
| Wasserstoff: | 8,5 Gew. %; |

Bestimmung der Menge an basischen Gruppen: 2,16 mol/ Liter Harz

### 1c) Herstellung eines Harzes mit Monopicolylamingruppen

### Apparatur :

6 Liter Reaktor, Rührer, pH Elektrode, Natronlaugedosierung, Rückflußkühler, Heizbad

1000 ml VE-Wasser und 1500 ml Harz aus Stufe 1c) wurden vorgelegt.

Die Suspension wurde auf 90°C erhitzt. In 4 Stunden wurde bei dieser Temperatur eine wässrige Lösung von 639,6 Gramm Picolylchloridhydrochloridlösung (519,47 g Picolylchloridhydrochlorid 98,5 % ig + 120,13 g Wasser) dosiert.

Der pH Wert wurde hierbei bei pH 7,0 durch Dosierung wässriger 50 gew.%iger Natronlauge gehalten.

Anschließend wurde auf 95 °C erhitzt und weitere 6 Stunden bei pH 7,0 gerührt.

Verbrauch an 50 gew.-%iger Natronlauge: 553 g

Der Ansatz wurde abgekühlt. Das Harz auf ein Sieb gegeben und mit Wasser ausgewaschen
Ausbeute: 1900 ml

Die Harzmasse wurde in eine Säule gegeben und mit 1000 ml 4gew.%iger Natronlauge behandelt.
Ausbeute: 1900 ml

Elementaranalytische Zusammensetzung:
C : 80,0 Gew. %
N: 11,5 gew. %
H : 7,4 Gew. %
O : 2,6 Gew. %
HCl - Zahl : 2,25 mol/l
Volumen Lieferform: 100 ml
Volumen Chloridform: 138 ml
Trockengewicht: 50 ml 17,06 g

### 1d) Herstellung eines bifunktionellen, monodispersen Harzes mit Picolylamingruppen und Methylphosphonsäuregruppen

### Apparatur:

3 Liter Reaktor, Rührer, pH Elektrode, Natronlaugedosierung, Rückflußkühler, Heizbad

260 ml VE-Wasser und 500 ml Harz aus Beispiel 1c) wurden bei Raumtemperatur vorgelegt. In 15 Minuten wurden bei 25 °C 149 Gramm Dimethylphosphit unter Rühren hinzu dosiert. Es wurde weitere 30 Minuten nachgerührt Die Suspension wurde auf 60°C erhitzt. Innerhalb von 4 Stunden wurden 882 Gramm Schwefelsäure Monohydrat hinzu dosiert. Es wurde auf Rückflusstemperatur erhitzt und bei dieser Temperatur wurden innerhalb von einer Stunde 259 Gramm 30 gew. % ige Formalinlösung hinzu dosiert.

Es wurde weitere 6 Stunden bei Rückflußtempertur gerührt. Nach dem Abkühlen wurde das Harz über ein Sieb abfiltriert und mit VE-Wasser gewaschen.

Das Harz wurde in eine Glassäule mit VE-Wasser gespült und klassiert.
Ausbeute: 725 ml

Das Harz wurde in eine Glassäule überführt. Von oben wurden 2000 ml 4 gew.-% ige wässrige Natronlauge in 2 Stunden hinzu dosiert. Anschließend wurde mit 2000 ml VE-Wasser gewaschen.
Ausbeute: 815 ml
Menge an Methylphosphonsäuregruppen : 1,54mol/l
Volumen Lieferform: 100 ml
Volumen 1.H - Form 81 ml
Volumen Na - Form : 105 ml
Volumen 2. H - Form 81 ml

## Patentansprüche

1. Monodisperse gelförmige oder makroporöse Methylstickstoffheterocyclenharze auf Basis wenigstens einer monovinylaromatischen Verbindung und wenigstens eines Vernetzers die als funktionelle Gruppe tertiäre Stickstoffatome in Strukturen der allgemeinen Formel (I) enthalten 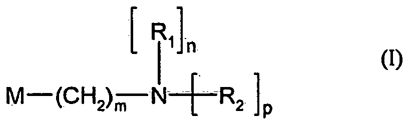 **dadurch gekennzeichnet, dass**
R₁ für einen gegebenenfalls substituierten Rest der Reihe Picolyl, Methylchinolin oder Methylpiperidin steht, R₂ für einen Rest -CH₂P(O)(OR₃)₂ oder -CH₂-S-CH₂COOR₃ oder -CH₂-S-C₁-C₄-alkyl oder -CH₂-S-CH₂CH(NH₂)COOR₃ oder -CH₂- S-CH₂-CH(OH)-CH₂(OH) oder 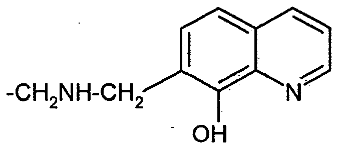 oder seine Derivate oder -C=S(NH₂) steht und
R₃ für einen Rest der Reihe H, Na oder K steht, m für eine ganze Zahl von 1 bis 4 steht, n und p jeweils unabhängig voneinander für Zahlen zwischen 0,1 und 1,9 stehen und die Summe von n und p gleich 2 ist und M für die Polymermatrix steht, wobei als monodispers, solche Perlpolymerisate oder Methylstickstoffheterocyclenharze mit zusätzlicher Chelatfunktion bezeichnet werden, bei denen mindestens 90 Volumen- oder Massen-% der Teilchen einen Durchmesser besitzen, der in dem Intervall mit der Breite von ± 10 % des häufigsten Durchmessers um den häufigsten Durchmesser herum liegt und als Vernetzer multifunktionelle ethylenisch ungesättigte Verbindungen eingesetzt werden.

2. Methylstickstoffheterocyclenharze gemäß Anspruch 1, **dadurch gekennzeichnet, dass** diese eine makroporöse Struktur aufweisen.

3. Methylstickstoffheterocyclenharze gemäß einem der Ansprüche 1 oder 2, **dadurch gekennzeichnet, dass** als monovinylaromatische Verbindung Styrol und als polyvinylaromatische Verbindung Divinylbenzol eingesetzt wird.

4. Methylstickstoffheterocyclenharze gemäß einem der Ansprüche 1 bis 3, **dadurch gekennzeichnet, dass** n für Zahlen von 0,5 bis 1,5 und p für Zahlen von 1,5 bis 0,5 steht und die Summe aus n + p stets 2 ergibt.

5. Methylstickstoffheterocyclenharze gemäß einem der Ansprüche 1 bis 3, **dadurch gekennzeichnet, dass** diese eine monodisperse Teilchengrößenverteilung aufweisen.

6. Verwendung der Methylstickstoffheterocyclenharze gemäß einem der Ansprüche 1 bis 5 zur Adsorption von Metallen aus wässrigen Lösungen, organischen Flüssigkeiten oder Gasen.

7. Verwendung der Methylstickstoffheterocyclenharze gemäß Anspruch 6, **dadurch gekennzeichnet, dass** als Metalle Quecksilber, Eisen, Cobalt, Nickel, Kupfer, Zink, Blei, Cadmium, Mangan, Uran, Vanadium, Elemente der Platingruppe sowie Gold oder Silber isoliert werden.

8. Verwendung der Methylstickstoffheterocyclenharze gemäß Anspruch 7, **dadurch gekennzeichnet, dass** Kupfer aus Kupfer- / Eisensulfatlösungen oder aus Kupfer- / Nickelsulfatlösungen isoliert wird.

9. Verwendung der Methylstickstoffheterocyclenharze gemäß der Ansprüche 6 bis 8, **dadurch gekennzeichnet, dass** sie in der Metallurgie, in der chemischen Industrie, der Elektronik-Industrie, der Abfall-, Entsorgungs-, Verwertungsindustrie oder der Galvano- oder Oberflächentechnik eingesetzt werden.

10. Verfahren zur Herstellung monodisperser, makroporöser oder gelförmiger Methylstickstoffheterocyclenharze die als funktionelle Gruppe tertiäre Stickstoffatome in Strukturen der allgemeinen Formel (I) tragen, 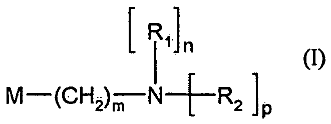 worin R₁, R₂, M, m, n und p die in Anspruch 1 genannten Bedeutungen haben, **dadurch gekennzeichnet, dass** man
a) Monomertröpfchen aus einem Gemisch einer monovinylaromatischen Verbindung, eines Vernetzers, einem Initiator oder einer Initiator-Kombination, sowie gegebenenfalls einem Porogen zu einem vernetzten Perlpolymerisat umsetzt,
b) das erhaltene Perlpolymerisat mit primären Aminogruppen funktionalisiert,
c) das funktionalisierte, Amingruppen-enthaltende Perlpolymerisat mit Halogenmethylstickstoffheterocyclen zu Perlpolymerisaten mit basischen, Anionen-austauschenden Gruppen, die Methylstickstoffheterocyclen enthalten, umsetzt und
d) das in Verfahrensschritt c) erhaltene Methylstickstoffheterocyclen-enthaltende Perlpolymerisat mit Phosphor-Wasserstoff-aciden Verbindunegn oder Schwefel-Wasserstoff-aciden Verbindungen oder aber C-H-aciden Hydroxychinonderivaten und zudosieren einer wässrigen Formalinlösung bei Temperaturen oberhalb 50°C mit zusätzlichen Chelatgruppen umsetzt, wodurch dieses als zusätzliche Chelatgruppe -CH₂P(O)(OR₃)₂ oder -CH₂-S-CH₂COOR₃ oder -CH₂-S-C₁-C₄-alkyl oder -CH₂-S-CH₂CH(NH₂)COOR₃ oder -CH₂-S-CH₂CH(OH)CH₂(OH) oder 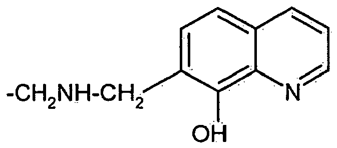 oder seine Derivate oder -C=S(NH2) erhält, wobei als monodispers solche Perlpolymerisate oder Methylstickstoffheterocyclenharze mit zusätzlicher Chelatfunktion bezeichnet werden, bei denen mindestens 90 Volumen-oder Massen-% der Teilchen einen Durchmesser besitzen, der in dem Intervall mit der Breite von ± 10 % des häufigsten Durchmessers um den häufigsten Durchmesser herum liegt und als Vernetzer multifunktionelle ethylenisch ungesättigte Verbindungen eingesetzt werden.

## Claims

1. Monodisperse gel-type or macroporous methyl nitrogen heterocycle resins which are based on at least one monovinylaromatic compound and at least one crosslinker and contain tertiary nitrogen atoms in structures of the general formula (I) 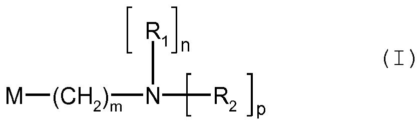 as functional group, **characterized in that**
R₁ is an optionally substituted radical from the group consisting of picolyl, methylquinoline and methylpiperidine, R₂ is a radical -CH₂P(O) (OR₃)₂ or -CH₂-S-CH₂COOR₃ or -CH₂-S-C₁-C₄-alkyl or -CH₂-S-CH₂CH(NH₂)COOR₃ or -CH₂-S-CH₂-CH(OH)-CH₂(OH) or 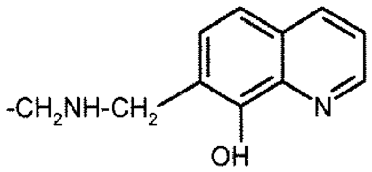 or derivatives thereof or -C=S(NH₂),
R₃ is a radical from the group consisting of H, Na and K, m is an integer from 1 to 4, n and p are each, independently of one another, a number in the range from 0.1 to 1.9 and the sum of n and p is 2 and M is the polymer matrix, where the term monodisperse refers to bead polymers or methyl nitrogen heterocycle resins having an additional chelating function in which at least 90% by volume or % by mass of the particles have a diameter which is in the range of the mode of the diameter ± 10% of the mode of the diameter, and multifunctional ethylenically unsaturated compounds are used as the crosslinkers.

2. Methyl nitrogen heterocycle resins according to Claim 1, **characterized in that** they have a macroporous structure.

3. Methyl nitrogen heterocycle resins according to either Claim 1 or 2, **characterized in that** styrene is used as monovinylaromatic compound and divinylbenzene is used as polyvinylaromatic compound.

4. Methyl nitrogen heterocycle resins according to any of Claims 1 to 3, **characterized in that** n is a number from 0.5 to 1.5 and p is a number from 1.5 to 0.5 and the sum of n + p is always 2.

5. Methyl nitrogen heterocycle resins according to any of Claims 1 to 3, **characterized in that** they have a monodisperse particle size distribution.

6. Use of the methyl nitrogen heterocycle resins according to any of Claims 1 to 5 for the adsorption of metals from aqueous solutions, organic liquids or gases.

7. Use of the methyl nitrogen heterocycle resins according to Claim 6, **characterized in that** metals isolated are mercury, iron, cobalt, nickel, copper, zinc, lead, cadmium, manganese, uranium, vanadium, elements of the platinum group and also gold or silver.

8. Use of the methyl nitrogen heterocycle resins according to Claim 7, **characterized in that** copper is isolated from copper/iron sulphate solutions or from copper/nickel sulphate solutions.

9. Use of the methyl nitrogen heterocycle resins according to any of Claims 6 to 8, **characterized in that** they are used in metallurgy, in the chemical industry, in the electronics industry, in the waste, disposal, recycling industry or electroplating or surface technology.

10. Process for preparing monodisperse, macroporous or gel-type methyl nitrogen heterocycle resins bearing tertiary nitrogen atoms in structures of the general formula (I) 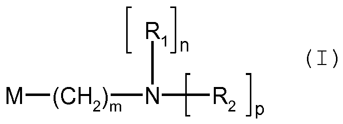 as functional group,
where R₁, R₂, M, m, n and p are as defined as in Claim 1, **characterized in that**
a) monomer droplets of a mixture of a monovinylaromatic compound, a crosslinker, an initiator or an initiator combination and optionally a porogen are reacted to form a crosslinked bead polymer,
b) the bead polymer obtained is functionalized with primary amino groups,
c) the functionalized bead polymer containing amine groups is reacted with halomethyl nitrogen heterocycles to form bead polymers which have basic, anion-exchanging groups and contain methyl nitrogen heterocycles and
d) the bead polymer containing methyl nitrogen heterocycles obtained in process step c) is reacted with phosphorus-hydrogen-acidic compounds or sulphur-hydrogen-acidic compounds or else C-H-acidic hydroxyquinone derivatives and introduction of an aqueous formalin solution at temperatures above 50°C having additional chelating groups, as a result of which this acquires -CH₂P(O)(OR₃)₂ or -CH₂-S-CH₂COOR₃ or -CH₂-S-C₁-C₄-alkyl or - CH₂-S-CH₂CH(NH₂)COOR₃ or -CH₂-S-CH₂CH(OH)CH₂(OH) or 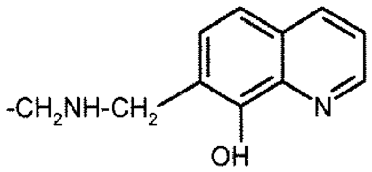 or derivatives thereof or -C=S(NH₂)
as additional chelating group,
where the term monodisperse refers to bead polymers or methyl nitrogen heterocycle resins having an additional chelating function in which at least 90% by volume or % by mass of the particles have a diameter which is in the range of the mode of the diameter ± 10% of the mode of the diameter, and multifunctional ethylenically unsaturated compounds are used as the crosslinkers.

## Revendications

1. Résines monodispersées en forme de gel ou macroporeuses de méthyl-hétérocycle azoté à base d'au moins un composé monovinylaromatique et d'au moins un réticulant qui contiennent comme groupe fonctionnel des atomes d'azote tertiaire dans des structures de formule générale (I) 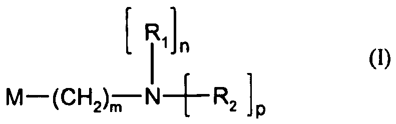 **caractérisées en ce que**
R₁ représente un radical le cas échéant substitué de la série picolyle, méthylquinoléine ou méthylpipéridine, R₂ représente un radical -CH₂P(O)(OR₃)₂ ou -CH₂-S-CH₂COOR₃ ou -CH₂-S-C₁-C₄-alkyle ou -CH₂-S-CH₂CH(NH₂)COOR₃ ou -CH₂-S-CH₂-CH(OH)-CH₂(OH) ou 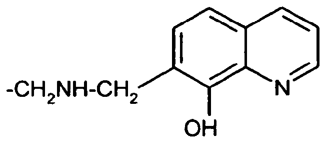 ou ses dérivés ou -C=S(NH₂) et
R₃ représente un radical de la série H, Na ou K, m représente un nombre entier de 1 à 4, n et p représentent, à chaque fois indépendamment l'un de l'autre, des nombres entre 0,1 et 1,9 et la somme de n et p vaut 2 et M représente la matrice polymère, en désignant les polymères en billes ou les résines de méthyl-hétérocycle azoté présentant une fonction supplémentaire de chélate par monodispersés lorsqu'au moins 90% en volume ou en masse des particules présentent un diamètre qui se situe dans l'intervalle d'une largeur de ±10% du diamètre le plus fréquent autour du diamètre le plus fréquent et en utilisant comme réticulant des composés éthyléniquement insaturés multifonctionnels.

2. Résines de méthyl-hétérocycle azoté selon la revendication 1, **caractérisées en ce qu'**elles présentent une structure macroporeuse.

3. Résines de méthyl-hétérocycle azoté selon l'une quelconque des revendications 1 ou 2, **caractérisées en ce qu'**on utilise, comme composé monovinylaromatique, du styrène et comme composé polyvinylaromatique, du divinylbenzène.

4. Résines de méthyl-hétérocycle azoté selon l'une quelconque des revendications 1 à 3, **caractérisées en ce que** n représente des nombres de 0,5 à 1,5 et p des nombres de 1,5 à 0,5 et la somme de n + p vaut toujours 2.

5. Résines de méthyl-hétérocycle azoté selon l'une quelconque des revendications 1 à 3, **caractérisées en ce qu'**elles présentent une répartition monodispersée des grosseurs des particules.

6. Utilisation des résines de méthyl-hétérocycle azoté selon l'une quelconque des revendications 1 à 5 pour l'adsorption de métaux de solutions aqueuses, de liquides organiques ou de gaz.

7. Utilisation des résines de méthyl-hétérocycle azoté selon la revendication 6, **caractérisée en ce qu'**on isole, comme métaux, du mercure, du fer, du cobalt, du nickel, du cuivre, du zinc, du plomb, du cadmium, du manganèse, de l'uranium, du vanadium, des éléments du groupe du platine ainsi que de l'or ou de l'argent.

8. Utilisation des résines de méthyl-hétérocycle azoté selon la revendication 7, **caractérisée en ce qu'**on isole du cuivre de solutions de sulfate de cuivre/sulfate de fer ou de solutions de sulfate de cuivre/sulfate de nickel.

9. Utilisation des résines de méthyl-hétérocycle azoté selon les revendications 6 à 8, **caractérisée en ce qu'**elles sont utilisées dans la métallurgie, dans l'industrie chimique, dans l'industrie électronique, dans l'industrie de traitement de déchets, de récupération de déchets et de valorisation ou dans l'industrie de la galvanisation ou de traitement de surface.

10. Procédé pour la préparation de résines monodispersées, macroporeuses ou sous forme de gel de méthyl-hétérocycle azoté, qui portent, comme groupe fonctionnel, des atomes d'azote tertiaire dans des structures de formule générale (I), 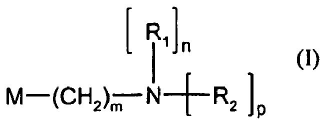 dans laquelle R₁, R₂, M, m, n et p présentent les significations mentionnées dans la revendication 1, **caractérisé en ce qu'**on
a) transforme des gouttes de monomères d'un mélange d'un composé monovinylaromatique, d'un réticulant, d'un initiateur ou d'une combinaison d'initiateurs, ainsi que le cas échéant d'un agent porogène, en un polymère en bille réticulé,
b) fonctionnalise le polymère en billes obtenu avec des groupes amino primaires,
c) transforme le polymère en billes fonctionnalisé, contenant des groupes amino avec des halogénométhylhétérocycles azotés en polymères en billes présentant des groupes basiques, échangeant des anions, qui contiennent des méthyl-hétérocycles azotés et
d) transforme le polymère en billes contenant des méthyl-hétérocycles azotés obtenu dans l'étape de procédé c) avec des composés phosphore-hydrogène acide ou des composés de type soufre-hydrogène acide ou encore des dérivés d'hydroxyquinone à C-H acide et par dosage d'une solution aqueuse de formaline à des températures supérieures à 50°C avec des groupes chélatés supplémentaires, suite à quoi celui-ci obtient comme groupes chélatés supplémentaires -CH₂P(O)(OR₃)₂ ou -CH₂-S-CH₂COOR₃ ou -CH₂-S-C₁-C₄-alkyl ou -CH₂-S-CH₂CH(NH₂)COOR₃ ou -CH₂-S-CH₂CH(OH)CH₂(OH) ou 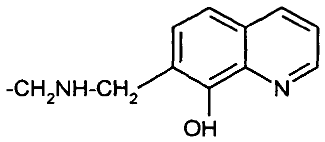 ou ses dérivés ou -C=S(NH₂) et
en désignant les polymères en billes ou les résines de méthyl-hétérocycle azoté présentant une fonction supplémentaire de chélate par monodispersés lorsqu'au moins 90% en volume ou en masse des particules présentent un diamètre qui se situe dans l'intervalle d'une largeur de ±10% du diamètre le plus fréquent autour du diamètre le plus fréquent et en utilisant comme réticulant des composés éthyléniquement insaturés multifonctionnels.
